# EUROPÄISCHE PATENTSCHRIFT

(11) **EP 1 239 322 B1**
(45) Veröffentlichungstag und Bekanntmachung des Hinweises auf die Patenterteilung: **21.05.2014**
(21) Anmeldenummer: 02003272.8
(22) Anmeldetag: 22.02.2002
(51) Int. Cl.: G02F 1/1343, G02F 1/1333, H01B 1/12, C08G 61/12, C09D 5/24, G02F 1/1337

(54) **Mehrschichtanordnung für elektro-optische Vorrichtungen**
Multilayer arrangement for electro-optic device
Arrangement multicouche pour dispositif électro-optique

(30) Priorität: 07.03.2001 DE 10110755; 06.06.2001 DE 10127401
(43) Veröffentlichungstag der Anmeldung: 11.09.2002
(73) Patentinhaber: Heraeus Precious Metals GmbH & Co. KG, 63450 Hanau (DE)
(72) Erfinder: Wehrmann, Rolf, Dr., 47800 Krefeld (DE); Heuer, Helmut-Werner, Dr., 47829 Krefeld (DE); Karbach, Alexander, Dr., 47800Krefeld (DE)
(74) Vertreter: Herzog, Martin

(56) Entgegenhaltungen:
- EP-A2- 0 690 457
- WO-A-01/29611
- WO-A1-00/20528
- DE-A1- 19 834 834
- US-A- 5 111 327
- US-A- 5 498 762
- US-A- 5 766 515
- "RÖMPP Online, Entry 'Polymere'", , Retrieved from the Internet: URL:http://www.roempp.com/prod/roempp.php [retrieved on 2011-05-26]

## Beschreibung

Die vorliegende Erfindung betrifft eine Mehrschichtanordnung für elektro-optische Vorrichtungen, insbesondere mit einer leitfähigen organischen Schicht auf einer transparenten Elektrode auf einem Substrat, wobei es sich bei dem Substrat vorzugsweise um ein transparentes Polymer handelt.

Für Fernseher oder Personal Computer (PC) usw. verwendbare Anzeigevorrichtungen mit Kathodenstrahlröhren (CRT, Cathod Ray Tube) haben großflächige Bildschirme. Da bei diesen Anzeigevorrichtungen ein mit einem leuchtfähigen Material beschichteter Bildschirm in einem vorbestimmten Abstand von einer Elektronenkanone angeordnet sein muss, besteht jedoch ein Problem derart, dass das gesamte Volumen solcher Anzeigevorrichtungen groß ist. Somit kann eine solche CRT-Anzeigevorrichtung nicht für elektronische Geräte mit kleinen Abmessungen und geringem Stromverbrauch, wie für einen an Wände aufhängbaren Fernseher, für tragbare Fernseher und Notebookcomputer usw. angewendet werden. Für Vorrichtungen mit kleinen Abmessungen und geringem Stromverbrauch sind Flat Panel-Anzeigevorrichtungen, wie Flüssigkristallanzeigevorrichtungen (LCD, Liquid Crystal Display, z.B. TN-, STN-, DSTN-Displays, ferroelektrische Displays und polymer dispersed LC-Anordnungen (PDLC)), Plasma-Anzeigevorrichtungen (PDP, Plasma Display Panel), elektrolumineszente Anzeigevorrichtungen (OLED, Organic Electroluminescent Display) Elektrophosphoreszenz-Anzeigen (OLED mit Phosphoreszenzemitter) und vakuumfluoreszente Anzeigevorrichtungen (VFD, Vacuum Fluorescent Display) oder elektrochrome Displays (ECD) sowie elektronisches Papier (elektronic paper, electronic ink) entwickelt worden. Unter diesen Flat Panel-Anzeigevorrichtungen stellen die LCD-Anzeigevorrichtungen trotz verschiedener Nachteile die in letzter Zeit am meisten erforschten dar, da sie eine hohe Bildqualität und einen geringen Stromverbrauch aufweisen. Es gibt zwei Typen von LCDs: LCDs mit passiver Matrix und LCDs mit aktiver Matrix (AMLCD, active matrix LCD). Unter diesen LCDs ist der AMLCD die in letzter Zeit am meisten verwendete LCD-Typ, da bei dieser jedes Pixel von einem Schaltelement unabhängig ansteuerbar ist, so dass ein hohes Kontrastverhältnis und eine hohe Auflösung erreichbar sind, da die von den benachbarten Pixel verursachten Interferenzen verringert werden.

Im allgemeinen werden Flüssigkristalle leicht durch externen Einfluss wie ein elektrisches Feld, ein magnetisches Feld, Zug, Druck u.ä. beeinflusst. Wegen dieser Eigenschaften werden Flüssigkristalle als Lichtblende oder selbst als Displayvorrichtung verwendet.

Zur Ausnutzung dieser Eigenschaften der Flüssigkristalle können sie nach Bedarf unter Einfluss der Umgebung bewegt werden. Für die gleichförmige Orientierung von Flüssigkristallen ist u.a. neben der eigentlichen Orientierungsschicht (geriebenes Polyimid) eine homogene und glatte Unterlage (Substrat) wesentlich. Der Mehrschichtaufbau verschiedener LCD-Typen ist beispielsweise beschrieben in "Displays: Einführung in die Technik aktiver und passiver Anzeigen", Peter M. Knoll, Hüthig Verlag Heidelberg, 1986.

Ein LCD gemäß dem Oberbegriff des Anspruchs 1 ist aus EP-A-0 690 457 bekannt.

Ein ähnlicher Schichtaufbau, wie hier beansprucht, ist in WO 01/29611 offenbart und bildet Stand der Technik gemäß Art. 54(3) EPÜ. Ferner sind aus DE 198 34 834 und WO 00/20528 ähnliche Schichtaufbauten bekannt, die u.a. eine Schicht aus Baytron P aufweisen.

Neuerdings steigt das Interesse an flexiblen Displays und Anzeigevorrichtungen. Als transparente Substrate werden dabei Polymerfolien wie Polycarbonat oder andere transparente Polymere verwendet. Diese Substrate werden mit einer leitfähigen Schicht, vorzugsweise Indium-Zinn-Oxid (ITO) versehen. Nachteilig ist jedoch dabei die zu große Rauhigkeit der leitfähigen Schicht, die zu Kurzschlüssen beim Betrieb und zu hohem Ausschuss bei der Fertigung führen kann. Fertigungsbedingt weisen übliche anorganische leitfähige Schichten auf Kunststoffsubstraten stets größere Rauhigkeiten als auf Glas auf. Weiterhin sind anorganische leitfähige Schichten wie ITO spröde, so dass auf flexiblen Unterlagen aufgrund der unterschiedlichen Ausdehnungskoeffizienten bzw. Dehnbarkeit und Zähigkeit Risse auftreten, die zu einer Unterbrechung der elektrischen Leitfähigkeit führen können. Dies tritt besonders bei der Lagerung und/oder Handhabung aufgewickelter Substrate wie z.B. ITO-PET für roll to roll Prozesse auf.

Aufgabe der Erfindung war daher die Entwicklung neuer Schichtanordnungen, die die genannten Nachteile nicht zeigen.

Zur Lösung der Aufgabe wird eine Schicht eines organischen leitfähigen Polymer-systems direkt auf die bereits vorhandene leitfähige ITO-Schicht des Substrats aufgebracht. Durch Aufbringen des leitfähigen Polymersystems werden Oberflächenrauhigkeiten der leitfähigen Schicht auf dem Substrat, besonders auf Kunststoffsubstraten, ausgeglichen. Weiterhin überspannt das Polymersystem vorhandene Risse. Es gewährleistet durch seine Dehnbarkeit und Zähigkeit, dass auch nach Handhabung des erfindungsgemäßen Schichtsystems ggf. vorhandene Risse mit leitfähigen Pfaden überspannt bleiben und die Oberflächenleitfähigkeit nicht unterbrochen wird.

Die Erfindung betrifft eine Schichtanordnung, wie in Anspruch 1 definiert.

In einer bevorzugten Ausführungsform der Erfindung handelt es sich bei dem elektro-optisch aktiven Material um Flüssigkristalle. In einer besonders bevorzugten Ausführungsform handelt es sich bei dem elektro-optisch aktiven Material um Flüssigkristalle und bei mindestens einem der beiden Substrate um ein Kunststoffsubstrat. Die Schichtanordnung kann zum Schutz gegen Umwelteinflüsse wie mechanische Beschädigung, Feuchtigkeit usw. gekapselt sein.

Bei dem organischen leitfähigen Polymersystem handelt es sich um ein System auf Basis von kationischen Polythiophenen.

Unter dem leitfähigen Polymersystem wird ein System verstanden, das neben dem eigentlichen organischen leitfähigen Polymer weitere Bestandteile enthalten kann. Dabei kann es sich beispielsweise um Filmbildner, Vernetzer, Thermosolventien, Bindemittel oder die elektrische Leitfähigkeit verbessernde Additive handeln. Beispiele sind in US-A 5 766 515 oder EP-A 602 713 beschrieben.

Bei den kationischen Polythiophenen handelt es sich um Polyalkylendioxythiophene der Formeln (Ia-1) 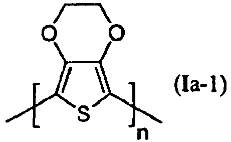 worin
- n: für eine ganze Zahl von 2 bis 10 000, vorzugsweise 3 bis 5 000 steht.

In einer weiteren bevorzugten Ausführungsfonn der Erfindung steht n in den genannten Formeln für eine ganze Zahl von 4 bis 150, vorzugsweise 4 bis 50.

Als Gegenion dient Polystyrolsulfonsäure

Das Molekulargewicht der Polystyrrolsulfonsäure beträgt vorzugs-weise 1000 bis 2 000 000, besonders bevorzugt 2 000 bis 500 000. Die Polystyrrolsulfonsäure ist im Handel erhältlich, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f).

Die Herstellung der Polyalkylendioxythiophene ist beispielsweise in EP-A 0 440 957 (= US-A 5 300 575) beschrieben. Die Polyalkylendioxythiophene werden durch oxidative Polymerisation hergestellt. Dadurch erhalten sie positive Ladungen, die in den Formeln nicht dargestellt sind, da ihre Zahl und ihre Position nicht einwandfrei feststellbar sind.

Die Polythiophendispersion kann durch etablierte Verfahren wie Gießen, Drucken, Sprühen, Tauchen, Fluten oder Inkjet auf das transparente leitfähige Substrat aufgebracht werden.

Als transparentes Substrat, das mit einer leitfähigen Schicht versehen ist, sind Glas, Dünnstglas (flexibles Glas) oder Kunststoffe geeignet.

Bevorzugt besteht mindestens eines der Substrate aus Kunststoff.

Besonders geeignete Kunststoffe sind: Polycarbonate, Polyester, Copolycarbonate, Polysulfon, Polyethersulfon, Polyimid, Polyethylen, Polypropylen oder cyclische Polyolefine bzw. cyclische Olefincopolymere (COC) oder hydrierte Styrol(co)polymere.

Bevorzugte Polymere sind Polysulfon, Polyethersulfon, Polyester, cyclische Olefincopolymere, hydrierte Styrol(co)polymere und Polycarbonate. Aus der Gruppe der Polyester sind PET und PEN (Polyethylenterephthalat bzw. Polyethylennaphthenat) bevorzugt.

Geeignete Polymersubstrate sind beispielsweise Polyesterfolien, PES-Folien der Firma Sumitomo oder Polycarbonatfolien der Firma Bayer AG (Makrofol®).

Diese Substrate können durch eine zusätzliche Schicht kratzfest und/oder chemikalienresistent ausgerüstet sein, z.B. Marnot®-Folien (Bayer AG).

Aus der Gruppe der Polycarbonate sind besonders die Poly- oder Copolycarbonate geeignet, die eines der nachfolgenden Segmente enthalten:

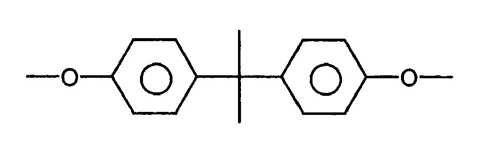

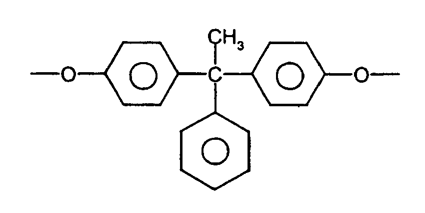

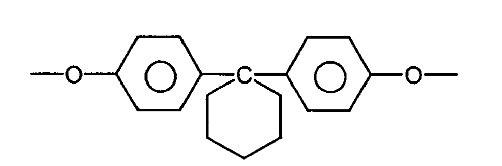

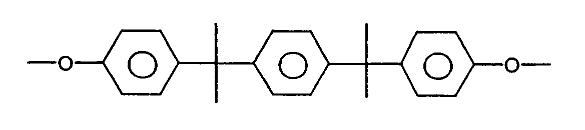

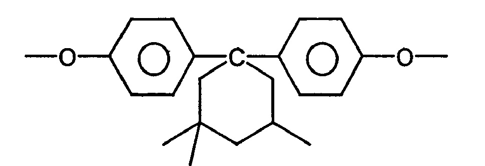

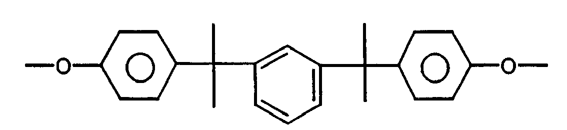

Weitere Bisphenole zum Aufbau von Polycarbonaten sind beispielsweise beschrieben in EP-A 359 953.

### Beispiele

### 1. Aufbringen einer leitfähigen Polythiophenschicht (Baytron®P)

Aufbringen der Baytron® P-Schicht auf das ITO:

Etwa 10 ml der ca. 1,2 %igen Poly(ethylendioxythiophen)/Polystyrolsulfonsäure-Lösung (BAYER AG, Leverkusen, Baytron® P) werden filtriert (Millipore HV, 0,45 µm). Das Substrat wird anschließend auf eine Lackschleuder gelegt und die filtrierte Lösung wird auf der ITO-beschichteten Seite des Substrats verteilt. Anschließend wird die überstehende Lösung durch Rotation des Tellers bei 500 U/min über den Zeitraum von 3 min abgeschleudert. Danach wird das so beschichtete Substrat 5 min lang bei 110°C auf einer Heizplatte getrocknet. Die Schichtdicke beträgt 60 nm (Tencor, Alphastep 200).

Tabelle 1 zeigt den Einfluss der Baytron®P-Lösung auf die Oberflächenrauhigkeit des Substrates.

**Tabelle 1**

| | Substrat | Rauhigkeit rₐ (nm) |
|---|---|---|
| a) | Glas/ITO | 2,5 |
| b) | GIaSRTO/Baytron®P | 1,6 |
| c) | Polyester (PET)/ITO | 3,9 |
| d) | Polyester (PET)/ITO/Baytron®P | 2,5 |

Die Rauhigkeiten wurden mit Hilfe der Rasterkraftmikroskopie (AFM) ermittelt.

Man erkennt deutlich die glättende Wirkung, den die leitfähige Schicht auf die Substratoberfläche ausübt. Das Muster d) weist auch nach mehrmaliger mechanischer Behandlung ― Biegen, Rollen etc. ― keine sichtbaren Oberflächenrisse auf. Die Baytron®P-beschichteten Substrate können zum Aufbau von gängigen elektro-optisch aktiven Anordnungen, wie z.B. Flüssigkristallanzeigen, elektrochromen Displays usw. eingesetzt werden.

## Patentansprüche

1. Schichtanordnung, bestehend aus mindestens einem transparenten eine elektrisch leitfähige Schicht enthaltenden Substrat, einer elektro-optisch aktiven Schicht sowie einem weiteren eine elektrisch leitfähige Schicht enthaltenden Substrat, wobei mindestens eines der beiden elektrisch leitfähigen Substrate zusätzlich mit einem organischen leitfähigen Polymersystem beschichtet ist, und wobei die mindestens eine leitfähige Schicht, die mit dem leitfähigen Polymersystem beschichtet ist, eine Indium-Zinn-Oxid-Schicht ist, auf die das organisch leitfähige Polymersystem direkt aufgebracht ist, **dadurch gekennzeichnet, dass** es sich bei dem leitfähigen Polymersystem um ein kationisches Polyalkylendioxythiophen der Formel (Ia-1) 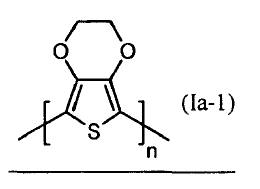 worin n für eine ganze Zahl von 2 bis 10.000 steht,
in Gegenwart von Polystyrolsulfonsäure als Gegenion. handelt.

2. Schichtanordnung gemäß Anspruch 1, **dadurch gekennzeichnet, dass** das transparente Substrat aus Glas oder einem Kunststoff besteht.

3. Schichtanordnung nach Anspruch 1, **dadurch gekennzeichnet, dass** mindestens eines der beiden Substrate ein Kunststoffsubstrat ist.

4. Schichtanordnung gemäß Anspruch 2 oder 3, **dadurch gekennzeichnet, dass** es sich bei dem Kunststoff um Polycarbonat oder Copolycarbonate, Polyester, Polysulfon, Polyethersulfon, Polyimid, Polypropylen, Polyethylen oder cyclische Olefincopolymere oder hydrierte Styrol(co)polymere handelt.

5. Schichtanordnung gemäß Anspruch 1, **dadurch gekennzeichnet, dass** es sich bei der elektro-optisch aktiven Schicht um eine Flüssigkristallschicht handelt.

## Claims

1. Layer arrangement comprising at least one transparent substrate comprising an electrically conductive layer, an electro-optically active layer and a further substrate comprising an electrically conductive layer, wherein at least one of the two electrically conductive substrates is additionally coated with an organic conductive polymer system, and wherein the at least one conductive layer which is coated with the conductive polymer system is an indium tin oxide layer on to which the organic conductive polymer system is applied directly, **characterized in that** the conductive polymer system is a cationic polyalkylenedioxythiophene of the formula (Ia-1) 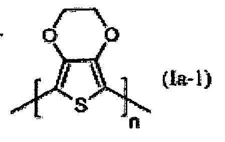 wherein
n represents an integer from 2 to 10,000,
in the presence of polystyrenesulphonic acid as a counter-ion.

2. Layer arrangement according to claim 1, **characterized in that** the transparent substrate is made of glass or a plastic.

3. Layer arrangement according to claim 1, **characterized in that** at least one of the two substrates is a substrate of plastic.

4. Layer arrangement according to claim 2 or 3, **characterized in that** the plastic is polycarbonate or copolycarbonates, polyester, polysulphone, polyether sulphone, polyimide, polypropylene, polyethylene or cyclic olefin copolymers or hydrogenated styrene (co)polymers.

5. Layer arrangement according to claim 1, **characterized in that** the electro-optically active layer is a liquid crystal layer.

## Revendications

1. Disposition de couches, constituée d'au moins un substrat transparent comprenant une couche électriquement conductrice, une couche active électro-optiquement et un autre substrat comprenant une couche électriquement conductrice, dans laquelle au moins un des deux substrats électriquement conducteurs est en outre revêtu d'un système polymérique organique conducteur et dans laquelle la au moins une couche conductrice, qui est revêtue par le système polymérique conducteur, est une couche d'oxyde d'étain-indium sur laquelle est déposé directement le système polymérique organique conducteur, **caractérisée en ce que** le système polymère conducteur est un polyalkylènedioxythiophène cationique de formule (Ia-1) 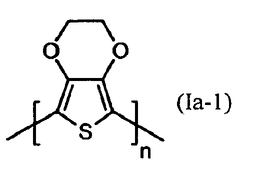 dans laquelle n représente un nombre entier de 2 à 10 000,
en présence d'acide polystyrènesulfonique comme contre-ion.

2. Disposition de couches selon la revendication 1, **caractérisée en ce que** le substrat transparent se compose de verre ou d'un plastique.

3. Disposition de couches selon la revendication 1, **caractérisée en ce qu'**au moins un des deux substrats est un substrat en plastique.

4. Disposition de couches selon la revendication 2 ou 3, **caractérisée en ce que** le plastique est un polycarbonate ou des copolycarbonates, un polyester, une polysulfone, un polyéthersulfone, un polyimide, un polypropylène, un polyéthylène ou des copolymères d'oléfine cycliques ou des (co-)polymères de styrène hydrogénés.

5. Disposition de couches selon la revendication 1, **caractérisée en ce que** la couche active électro-optiquement est une couche de cristal liquide.
